# EUROPEAN PATENT APPLICATION

(11) **EP 3 726 691 A1**
(43) Date of publication of application: **21.10.2020**
(21) Application number: 18887263.4
(22) Date of filing: 29.08.2018
(51) Int. Cl.: H02J 7/00, H02J 1/00

(54) **MOBILE CHARGING DEVICE, CONTROL METHOD AND CHARGING VEHICLE**

(30) Priority: 15.12.2017 CN 201711351152
(71) Applicant: Nio Nextev Limited, Hong Kong (CN)
(72) Inventor: FAN, Jinyan, Shanghai 201804 (CN); HE, Xu, Shanghai 201804 (CN)
(74) Representative: v. Bezold & Partner Patentanwälte - PartG mbB
(86) International application number: PCT/CN2018/102953
(87) International publication number: WO 2019/114323

(57) **Abstract**

The invention relates to a mobile charging device, a mobile charging control method and a charging vehicle, the device comprising: a charging control unit connected to a power distribution unit and one or more power units and configured to control the power distribution unit and the one or more power units; the one or more power units connected to the power distribution unit and configured to transmit electric energy to the power distribution unit; and the power distribution unit configured to distribute and output the electric energy according to required charging powers of vehicles to be charged. In the invention, a fuel cell is used to provide electric energy, which reduces pollution from the mobile charging device and increases the electricity carried therein. In addition, the distribution of power can be controlled to realize charging of multiple vehicles with different powers during the same period, thereby improving service efficiency and user experience.

## Description

### Technical Field

The invention relates to the technical field of electric vehicle charging, and in particular to a mobile charging device, a mobile charging control method and a charging vehicle.

### Background Art

With the rapid development of human society, automobiles, as a fast transportation means in the modern civilized society, have brought great promotion and convenience to the development of human society and people's lives, while also consuming a large amount of petroleum resources and causing serious pollution to people's living environment. However, an electric vehicle is an electric vehicle that is electrically powered and uses an electric motor instead of a fuel engine, which not only can realize zero emission and low noise and generate no pollution, but also can save on a great deal of increasingly depleted petroleum energy. With the increasing maturity and application of dedicated traction battery technologies for electric vehicles, the electric vehicles have become a hot spot and trend in the development of the world automobile industry. With the increase of retention of electric vehicles, the growth rate of charging facilities for electric vehicles cannot meet the charging demand of the electric vehicles. In addition, due to uneven geographical distribution of the charging facilities for the electric vehicles, user experience is poor because it is impossible for users to charge the electric vehicles in time in remote areas with few or no piles. Therefore, mobile charging vehicles emerge as required, which can provide a charging service for users anytime and anywhere.

However, existing mobile charging vehicles have at least the disadvantages as follows:
(1) most of the existing mobile charging vehicles are mobile charging vehicles that use a diesel generator to generate electricity, which causes serious environmental pollution;
(2) the mobile charging vehicles that use a battery to store energy cannot carry more electricity because of a limited energy density of the battery and a limited carrying capacity of the vehicles; and
(3) only vehicles with the same power can be served during one period, which has a low service efficiency and provides poor user experience.

### Summary of the Invention

The technical problem to be solved by the invention is to provide a mobile charging device, a mobile charging control method and a charging vehicle, in which a fuel cell is used to provide electric energy, which reduces pollution from the mobile charging device and increases the electricity carried therein. In addition, the distribution of power can be controlled to realize charging of multiple vehicles with different powers during the same period, thereby improving service efficiency and user experience.

In order to solve the technical problems described above, according to one aspect of the invention, a mobile charging device is provided, which comprises:
a charging control unit connected to a power distribution unit and one or more power units and configured to control the power distribution unit and the one or more power units;
the one or more power units connected to the power distribution unit and configured to transmit electric energy to the power distribution unit; and
the power distribution unit configured to distribute and output the electric energy according to required charging powers of vehicles to be charged.

Further, the charging control unit comprises:
the first charging control subunit configured to monitor the power unit, control the start or stop of the power unit, and send a required voltage instruction, a required current instruction, and a required power instruction to the power unit; and
a second charging control subunit configured to control the power distribution unit according to the number of the vehicles to be charged and required voltages and currents of the vehicles to be charged, and determine the number of power units that need to be allocated and an output voltage and current value of each of the allocated power units.

Further, the charging control unit also comprises a third charging control subunit, which is configured to control a charging process and monitor charging safety.

Further, the power unit comprises:
a fuel storage vessel configured to store a fuel and deliver the fuel to a fuel cell;
the fuel cell configured to convert chemical energy of the received fuel into electric energy and output a direct current voltage to a converter;
the converter configured to convert the direct current voltage into a direct current voltage required by a vehicle to be charged; and
a monitor configured to control the start and stop of a charging process and control the fuel storage vessel, the fuel cell, and the converter.

Further, the monitor comprises:
a first sub-monitor configured to control the speed at which the fuel storage vessel delivers the fuel to the fuel cell;
a second sub-monitor configured to monitor parameters of the fuel cell; and
a third sub-monitor configured to monitor parameters of the converter and adjust an output voltage and an output current of the transformer according to the required voltage instruction, the required current instruction and the required power instruction sent by the charging control unit.

Further, the monitor is also configured to send the parameters of the fuel cell and the parameters of the converter to the charging control unit.

Further, the parameters of the fuel cell comprise: temperature, voltage, current, power, and instantaneous energy efficiency of the fuel cell; and
the parameters of the converter comprise an output voltage, an output current, and temperature of the converter.

Further, the device also comprises one or more charging guns, which are connected to the power distribution unit and configured to connect to the vehicles to be charged and deliver, to the vehicles to be charged, electric energy output by the power distribution unit.

Further, the power distribution unit is a flexible power distribution unit, which flexibly distributes, to a charging gun in service, electric energy output by the power unit.

Further, the power distribution unit comprises a switch array, and the power unit and the charging gun are configured to be connected by configuring the switch array.

Further, the device also comprises a fuel cell life cycle management unit, which is configured to record an operating time and power of each of the power units during a charging process and balance the operating time of each of the power units by means of the charging control unit, such that during operating, the power units are evenly distributed with required powers of the vehicles to be charged.

According to another aspect of the invention, a mobile charging vehicle is provided, which comprises the mobile charging device described above.

According to still another aspect of the invention, a mobile charging control method is provided, which comprises:
acquiring required voltages and required currents of vehicles to be charged; and
distributing and outputting electric energy according to required powers based on the required voltages and the required currents of the vehicles to be charged.

Further, said distributing and outputting electric energy according to required powers based on the required voltages and the required currents of the vehicles to be charged comprises:
determining, according to the required voltages and the required currents, the number of power units that need to be allocated and an output voltage and current value of each of the allocated power units; and
sending a required voltage instruction and a required current instruction to the power unit, and distributing and outputting the electric energy according to the required powers.

Further, the method also comprises: controlling the distribution and output of the electric energy according to the required powers by means of controlling a switch array.

Further, the method also comprises:
recording an operating time and power of each power unit during a charging process; and
balancing the operating time of each power unit, and controlling the power units to be evenly distributed, during working, with required powers of the vehicles to be charged.

According to yet still another aspect of the invention, a controller is provided, which comprises a memory and a processor, wherein the memory stores a computer program that, when executed by the processor, is capable of implementing the steps of the method.

According to a further aspect of the invention, a computer-readable storage medium is provided for storing a computer program that, when executed by a computer or a processor, implements the steps of the method.

The invention has obvious advantages and beneficial effects as compared with the prior art. By means of the technical solutions above, the mobile charging device, the mobile charging control method and the charging vehicle of the invention can achieve considerable technical progress and practicality, have a wide range of industrial utility value, and have at least the advantages as follows:
(1) a fuel cell is used to provide electric energy, which reduces pollution from the mobile charging device, and also solves the low-efficiency problem caused due to a long energy storage time of the existing mobile charging vehicles which use a lithium battery to store energy;
(2) the electricity carried in the mobile charging device is increased, and the rational distribution of power can be controlled to realize charging of multiple vehicles with different powers during the same period, thereby improving service efficiency and user experience;
(3) collected data is used for life cycle management of the fuel cell, which promotes the consistency in aging of the fuel cell module and improves the economic efficiency of the cell; and
(4) the voltage of the fuel cell undergoes one-stage direct current to direct current (DC/DC) conversion for charging of a vehicle to be charged, which has a higher efficiency than the existing multi-stage conversion method.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

FIG. 1 is a schematic diagram of a mobile charging device provided in an embodiment of the invention;
FIG. 2 is a schematic diagram of a power unit of a mobile charging device provided in an embodiment of the invention;
FIG. 3 is a schematic diagram of the distribution and output of power that is controlled by means of a switch array provided in an embodiment of the invention;
FIG. 4 is a flowchart of a mobile charging control method provided in an embodiment of the invention; and
FIG. 5 is a flowchart of a mobile charging control method provided in another embodiment of the invention.

**Description of main reference numerals:**

| | |
|---|---|
| 1: Charging control unit | 2: Power unit |
| 3: Power distribution unit | 4: Charging gun |

### Detailed Description of Embodiments

In order to further illustrate the technical means used to achieve the intended purpose of the invention and the technical effects of the invention, the specific implementation of a mobile charging device, a mobile charging control method and a charging vehicle proposed in the invention and the effects thereof are described in detail hereinafter in conjunction with the accompanying drawings and the preferred embodiments.

A fuel cell is a high-efficiency power generation device that converts chemical energy of a fuel and an oxidant into electric energy directly in a manner of an electrochemical reaction without the involvement of a combustion process, the operating process of which is not limited by the Carnot cycle and the conversion efficiency of which is high, with little or no pollutant emission. Fuel cell electric vehicles powered by fuel cells can not only provide protection for the environment, but also can alleviate energy shortage and adjust energy structure. In the invention, a fuel for the fuel cell is used to provide energy, and after the fuel undergoes a chemical reaction inside the fuel cell, chemical energy is converted into electric energy. The output voltage of the fuel cell is converted, through a converter, into a battery voltage and a required current adapted to a vehicle to be charged, so as to charge the vehicle to be charged.

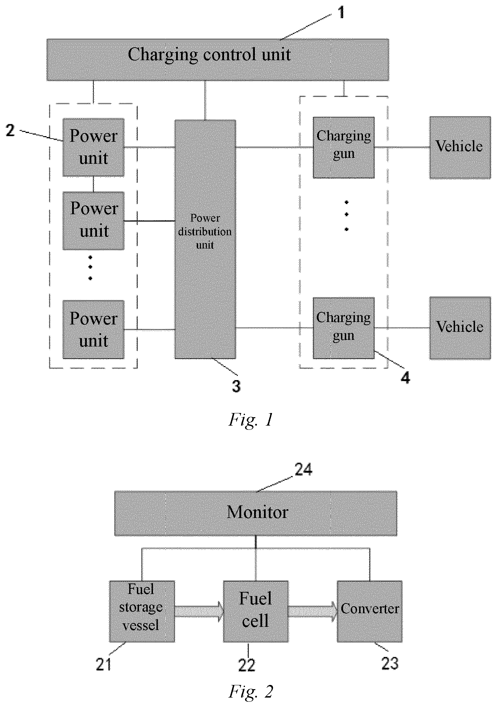

As shown in FIG. 1, it shows a mobile charging device, which comprises: a charging control unit 1, a power distribution unit 3, and one or more power units 2, wherein the charging control unit 1 is connected to the power distribution unit 3 and the one or more power units 2, and configured to control the power distribution unit 3 and the one or more power units 2; the one or more power units 2 are connected to the power distribution unit 3 and configured to transmit electric energy to the power distribution unit 3; and the power distribution unit 3 is configured to distribute and output the electric energy according to required charging powers of vehicles to be charged.

The device further comprises one or more charging guns 4, which are connected to the power distribution unit 3 and configured to connect to the vehicles to be charged and deliver, to the vehicles to be charged, electric energy output by the power distribution unit 3.

In actual application scenarios, one or more vehicles may be served during one period, with the required power of each vehicle being different. Therefore, the power distribution unit is used to distribute the output capacities of the power unit according to the powers of the vehicles to be charged, which improves the efficiency of a charging service and the user experience. The vehicle to be charged refers to an electric vehicle that uses the mobile charging device to perform charging, which is not limited to a pure electric vehicle, but may also be a hybrid vehicle or the like.

The charging control unit 1 comprises a first charging control subunit and a second charging control subunit, wherein the first charging control subunit is configured to monitor the power unit 2, control the start or stop of the power unit 2, and send a required voltage instruction, a required current instruction, and a required power instruction to the power unit 2. The second charging control subunit is configured to control the power distribution unit 3 according to the number of the vehicles to be charged and required voltages and currents of the vehicles to be charged, and determine the number of power units 2 that need to be allocated and an output voltage and current value of each of the allocated power units 2.

In some embodiments, the charging control unit 1 further comprises a third charging control subunit, which is configured to control a charging process and monitor charging safety. If the mobile charging device is an onboard mobile charging device, the charging control unit 1 may be further configured to be responsible for information exchange with a vehicle, to collect data information, etc.

As shown in FIG. 2, the power unit 2 comprises a fuel storage vessel 21, a fuel cell 22, a converter 23, and a monitor 24, wherein the fuel storage vessel 21 is configured to store a fuel and deliver the fuel to the fuel cell 22, and the fuel storage vessel 22 may be provided with a convenient inlet for addition of a fuel, which makes it convenient to add the fuel. The fuel cell 22 is configured to convert the chemical energy of the received fuel into electric energy and output a direct current voltage to the converter 23. The fuel cell 22 can be arranged in the form of a battery module. The converter 23 is configured to convert the direct current voltage into a direct current voltage required by a vehicle to be charged. The monitor 24 is configured to control the start and stop of a charging process and control the fuel storage vessel 21, the fuel cell 22, and the converter 23.

Specifically, the monitor 24 comprises a first sub-monitor, a second sub-monitor, and a third sub-monitor. The first sub-monitor is configured to control the speed at which the fuel storage vessel 21 delivers the fuel to the fuel cell 22; the second sub-monitor is configured to monitor parameters of the fuel cell 22; and the third sub-monitor is configured to monitor parameters of the converter 23 and adjust an output voltage and an output current of the transformer according to the required voltage instruction, the required current instruction and the required power instruction sent by the charging control unit 1.

The monitor 24 is further configured to send the parameters of the fuel cell 22 and the parameters of the converter 23 to the charging control unit 1. The parameters of the fuel cell 22 comprise: temperature, voltage, current, power, and instantaneous energy efficiency of the fuel cell 22. The parameters of the converter 23 comprise an output voltage, an output current, and temperature of the converter 23. The parameters described above are not limited thereto, and other parameters can be set according to specific charging requirements and control requirements.

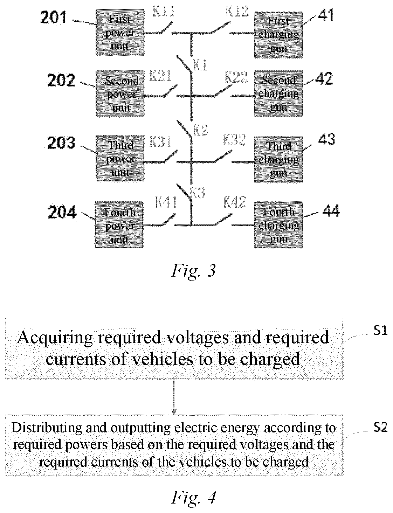

The power distribution unit 3 comprises a switch array, and the power unit 2 and the charging gun 4 are configured to be connected by configuring the switch array. The power unit 2 can be configured to connect to any of the charging guns 4 via the switch array. As shown in FIG. 3, taking the device comprising four power units and four charging guns as an example for description, it is assumed that the four power units are respectively a first power unit 201, a second power unit 202, a third power unit 203, and a fourth power unit 204; and the four charging guns are respectively a first charging gun 41, a second charging gun 42, a third charging gun 43, and a fourth charging gun 44. The switch array comprises K11, K12, K21, K22, K31, K32, K41, K42, K1, K2, and K3, which are connected in the manner shown in FIG. 3.

The following examples are used to illustrate that the power unit 2 can be configured to connect to any of the charging guns 4 via the switch array:
Example 1. the electric energy of all power units is output through the charging gun 41 for charging, and then the switches K11, K21, K31, K41, K1, K2, K3, and K12 are controlled to be closed.
Example 2. the electric energy of the power unit 21 and the power unit 22 is output through the charging gun 42, and then the switches K11, K21, K1, and K22 are controlled to be closed.
Example 3. the electric energy of the power unit 23 and the power unit 24 is output through the charging gun 44, and then the switches K31, K41, K3, and K42 are controlled to be closed.

The case where there are other numbers of power units 2 other than 4 is similar to the three examples above.

In some embodiments, the power distribution unit 3 may be a flexible power distribution unit 3, and the flexible power distribution unit 3 flexibly distributes, to a charging gun 4 in service, electric energy output by the power unit 2.

In addition, the device may further comprise a fuel cell life cycle management unit, which is configured to record an operating time and power of each of the power units 2 during a charging process and balance the operating time of each of the power units 2 by means of the charging control unit 1, such that during operating, the power units 2 are evenly distributed with required powers of the vehicles to be charged, thereby prompting the consistency in aging of the fuel cell module and improving the economic efficiency of the cell.

An embodiment of the invention further provides a mobile charging vehicle, which comprises any one of the mobile charging devices described above.

According to the mobile charging device and the charging vehicle comprising the mobile charging device that are described in the embodiments of the invention, a fuel cell is used to provide electric energy, which reduces pollution from the mobile charging device, and also solves the low-efficiency problem caused due to a long energy storage time of the existing mobile charging vehicles which use a lithium battery to store energy. Moreover, the electricity carried in the mobile charging device is increased, and the rational distribution of power can be controlled to realize charging of multiple vehicles with different powers during the same period, thereby improving service efficiency and user experience; in addition, collected data is used for life cycle management of the fuel cell, which promotes the consistency in aging of the fuel cell module and improves the economic efficiency of the cell; and the voltage of the fuel cell undergoes one-stage direct current to direct current (DC/DC) conversion for charging of a vehicle to be charged, which has a higher efficiency than the existing multi-stage conversion method.

As shown in FIG. 4, an embodiment of the invention further provides a mobile charging control method, which comprises:
step S1. acquiring required voltages and required currents of vehicles to be charged,
wherein the vehicle to be charged refers to an electric vehicle that uses the mobile charging device to perform charging, which is not limited to a pure electric vehicle, but may also be a hybrid vehicle or the like.

Step S2. distributing and outputting electric energy according to required powers based on the required voltages and the required currents of the vehicles to be charged.

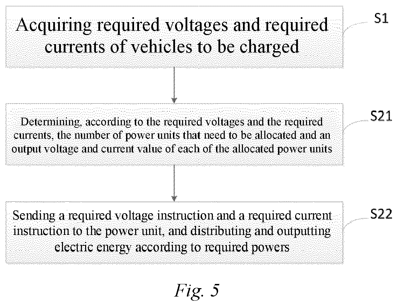

As shown in FIG. 5, step S2 further comprises:
step S21. determining, according to the required voltages and the required currents, the number of power units that need to be allocated and an output voltage and current value of each of the allocated power units; and
step S22. sending a required voltage instruction and a required current instruction to the power unit, and distributing and outputting the electric energy according to the required powers.

The power unit is configured to provide electric energy, and may comprise a fuel cell and a converter. After the fuel undergoes a chemical reaction inside the fuel cell, chemical energy is converted into electric energy. The output voltage of the fuel cell is converted, through a converter, into a battery voltage and a required current adapted to a vehicle to be charged, so as to charge the vehicle to be charged. By means of the power unit, the electricity carried in the mobile charging device can be increased, and the charging of multiple vehicles with different powers during the same period can be realized by means of the control over rational distribution of power, thereby improving service efficiency and user experience.

In the method, the distribution and output of the electric energy according to the required powers can be controlled by means of controlling a switch array. As shown in FIG. 3, a charging gun is used to output electric energy to a vehicle to be charged. The power distribution unit comprises a switch array, and the power unit and the charging gun are configured to be connected by configuring the switch array. The power unit can be configured to connect to any of the charging guns via the switch array. As shown in FIG. 3, taking the device comprising four power units and four charging guns as an example for description, it is assumed that the four power units are respectively a first power unit 201, a second power unit 202, a third power unit 203, and a fourth power unit 204; and the four charging guns are respectively a first charging gun 41, a second charging gun 42, a third charging gun 43, and a fourth charging gun 44. The switch array comprises K11, K12, K21, K22, K31, K32, K41, K42, K1, K2, and K3, which are connected in the manner shown in FIG. 3.

The following examples are used to illustrate that the power unit can be configured to connect to any of the charging guns via the switch array:
Example 1. the electric energy of all power units is output through the charging gun 41 for charging, and then the switches K11, K21, K31, K41, K1, K2, K3, and K12 are controlled to be closed.
Example 2. the electric energy of the power unit 21 and the power unit 22 is output through the charging gun 42, and then the switches K11, K21, K1, and K22 are controlled to be closed.
Example 3. the electric energy of the power unit 23 and the power unit 24 is output through the charging gun 44, and then the switches K31, K41, K3, and K42 are controlled to be closed.

The case where there are other numbers of power units 2 other than 4 is similar to the three examples above.

In some embodiments, the power distribution unit 3 may be a flexible power distribution unit 3, and the flexible power distribution unit 3 flexibly distributes, to a charging gun 4 in service, electric energy output by the power unit 2.

In addition, the device may further comprise a fuel cell life cycle management unit, which is configured to record an operating time and power of each of the power units 2 during a charging process and balance the operating time of each of the power units 2 by means of the charging control unit 1, such that during operating, the power units 2 are evenly distributed with required powers of the vehicles to be charged, thereby prompting the consistency in aging of the fuel cell module and improving the economic efficiency of the cell.

In some embodiments, the method further comprises:
step S3. recording an operating time and power of each power unit 2 during a charging process; and
step S4. balancing the operating time of each power unit 2, and controlling the power units 2 to be evenly distributed, during working, with required powers of vehicles to be charged.

Collected data is used for life cycle management of the fuel cell, which promotes the consistency in aging of the fuel cell module and improves the economic efficiency of the cell.

In the mobile charging method described in the embodiment of the invention, a fuel cell is used to provide electric energy, which reduces pollution from the mobile charging device, and also solves the low-efficiency problem caused due to a long energy storage time of the existing mobile charging vehicles which use a lithium battery to store energy. Moreover, the electricity carried in the mobile charging device is increased, and the rational distribution of power can be controlled to realize charging of multiple vehicles with different powers during the same period, thereby improving service efficiency and user experience; in addition, collected data is used for life cycle management of the fuel cell, which promotes the consistency in aging of the fuel cell module and improves the economic efficiency of the cell; and the voltage of the fuel cell undergoes one-stage direct current to direct current (DC/DC) conversion for charging of a vehicle to be charged, which has a higher efficiency than the existing multi-stage conversion method.

An embodiment of the invention further provides a controller, which comprises a memory and a processor, wherein the memory stores a computer program that, when executed by the processor, is capable of implementing the steps of the method.

An embodiment of the invention further provides a computer-readable storage medium for storing a computer program that, when executed by a computer or a processor, implements the steps of the method.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A mobile charging device, **characterized by** comprising:
a charging control unit connected to a power distribution unit and one or more power units and configured to control the power distribution unit and the one or more power units;
the one or more power units connected to the power distribution unit and configured to transmit electric energy to the power distribution unit; and
the power distribution unit configured to distribute and output the electric energy according to required charging powers of vehicles to be charged.

2. The mobile charging device according to claim 1, **characterized in that** the charging control unit comprises:
the first charging control subunit configured to monitor the power unit, control the start or stop of the power unit, and send a required voltage instruction, a required current instruction, and a required power instruction to the power unit; and
a second charging control subunit configured to control the power distribution unit according to the number of the vehicles to be charged and required voltages and currents of the vehicles to be charged, and determine the number of power units that need to be allocated and an output voltage and current value of each of the allocated power units.

3. The mobile charging device according to claim 2, **characterized in that** the charging control unit further comprises a third charging control subunit, which is configured to control a charging process and monitor charging safety.

4. The mobile charging device according to claim 2, **characterized in that** the power unit comprises:
a fuel storage vessel configured to store a fuel and deliver the fuel to a fuel cell;
the fuel cell configured to convert chemical energy of the received fuel into electric energy and output a direct current voltage to a converter;
the converter configured to convert the direct current voltage into a direct current voltage required by a vehicle to be charged; and
a monitor configured to control the start and stop of a charging process and control the fuel storage vessel, the fuel cell, and the converter.

5. The mobile charging device according to claim 4, **characterized in that** the monitor comprises:
a first sub-monitor configured to control the speed at which the fuel storage vessel delivers the fuel to the fuel cell;
a second sub-monitor configured to monitor parameters of the fuel cell; and
a third sub-monitor configured to monitor parameters of the converter and adjust an output voltage and an output current of the transformer according to the required voltage instruction, the required current instruction and the required power instruction sent by the charging control unit.

6. The mobile charging device according to claim 5, **characterized in that**
the monitor is further configured to send the parameters of the fuel cell and the parameters of the converter to the charging control unit.

7. The mobile charging device according to claim 6, **characterized in that**
the parameters of the fuel cell comprise: temperature, voltage, current, power, and instantaneous energy efficiency of the fuel cell; and
the parameters of the converter comprise an output voltage, an output current, and temperature of the converter.

8. The mobile charging device according to claim 1, **characterized in that**
the device further comprises one or more charging guns, which are connected to the power distribution unit and configured to connect to the vehicles to be charged and deliver, to the vehicles to be charged, electric energy output by the power distribution unit.

9. The mobile charging device according to claim 8, **characterized in that**
the power distribution unit is a flexible power distribution unit, which flexibly distributes, to a charging gun in service, electric energy output by the power unit.

10. The mobile charging device according to claim 8, **characterized in that**
the power distribution unit comprises a switch array, and the power unit and the charging gun are configured to be connected by configuring the switch array.

11. The mobile charging device according to claim 1, **characterized in that**
the device further comprises a fuel cell life cycle management unit, which is configured to record an operating time and power of each of the power units during a charging process and balance the operating time of each of the power units by means of the charging control unit, such that during operating, the power units are evenly distributed with required powers of the vehicles to be charged.

12. A mobile charging vehicle, **characterized by** comprising a mobile charging device according to any of claims 1 to 11.

13. A mobile charging control method, **characterized by** comprising:
acquiring required voltages and required currents of vehicles to be charged; and
distributing and outputting electric energy according to required powers based on the required voltages and the required currents of the vehicles to be charged.

14. The mobile charging control method according to claim 13, **characterized in that**
said distributing and outputting electric energy according to required powers based on the required voltages and the required currents of the vehicles to be charged comprises:
determining, according to the required voltages and the required currents, the number of power units that need to be allocated and an output voltage and current value of each of the allocated power units; and
sending a required voltage instruction and a required current instruction to the power unit, and distributing and outputting the electric energy according to the required powers.

15. The mobile charging control method according to claim 13, **characterized by**
further comprising: controlling the distribution and output of the electric energy according to the required powers by means of controlling a switch array.

16. The mobile charging control method according to claim 13, **characterized by**
further comprising:
recording an operating time and power of each power unit during a charging process; and
balancing the operating time of each power unit, and controlling the power units to be evenly distributed, during working, with required powers of the vehicles to be charged.

17. A controller, comprising a memory and a processor, wherein the memory stores a computer program that, when executed by the processor, is capable of implementing the steps of the method according to any of claims 13 to 16.

18. A computer-readable storage medium for storing a computer program that, when executed by a computer or a processor, implements the steps of the method according to any of claims 13 to 16.
